# EUROPEAN PATENT APPLICATION

(11) **EP 4 324 860 A1**
(43) Date of publication of application: **21.02.2024**
(21) Application number: 22788123.2
(22) Date of filing: 08.04.2022
(51) Int. Cl.: C08F 120/10, C08L 33/04, C09D 123/00, C09D 133/00, C09K 3/18, C09D 7/20, D06M 15/227

(54) **LIQUID-REPELLENT AGENT COMPOSITION, METHOD FOR TREATING SUBSTRATE, AND ARTICLE**

(30) Priority: 15.04.2021 JP 2021069286
(71) Applicant: AGC INC., Chiyoda-ku, Tokyo 1008405 (JP)
(72) Inventor: TANIGUCHI, Taihei, Tokyo 100-8405 (JP); KOGUCHI, Ryohei, Tokyo 100-8405 (JP); EGUCHI, Hajime, Tokyo 100-8405 (JP); IRIE, Masakatsu, Tokyo 100-8405 (JP); YASU, Yusuke, Tokyo 100-8405 (JP); IWAMOTO, Hiroaki, Tokyo 100-8405 (JP); SUGIYAMA, Kazunori, Tokyo 100-8405 (JP)
(74) Representative: Müller-Boré & Partner Patentanwälte PartG mbB
(86) International application number: PCT/JP2022/017385
(87) International publication number: WO 2022/220198

(57) **Abstract**

The present invention relates to a liquid-repellent composition which is hydrocarbon-based and can impart excellent liquid repellency; a method for treating a substrate using the liquid-repellent composition; and an article equipped with a coating film which is hydrocarbon-based and has excellent liquid repellency. The liquid-repellent composition of the present invention comprises a polymer (A) having a unit based on the following monomer (a); in the method for treating a substrate of the present invention, a substrate is treated with the liquid-repellent composition of the present invention; and the article of the present invention has a substrate treated with the liquid-repellent composition of the present invention. Formula (a) is (R¹-Q¹-)HC=CH(-Q²-R²). Q¹ and Q² each independently a divalent linking group. R¹ and R² each independently a monovalent hydrocarbon group having 8 to 24 carbon atoms.

## Description

### [Technical Field]

The present invention relates to a liquid-repellent composition, a method for treating a substrate, and an article.

### [Background Art]

A fluorine-based liquid-repellent comprising a fluorine compound may impart liquid repellency to a surface of an article. As a result of a decrease in surface tension of the article treated with the fluorine-based liquid-repellent by fluorine of the fluorine compound, the liquid repellency can be imparted. For example, fluorine-based liquid-repellents which comprise a polymer having a perfluoroalkyl group as a fluorine compound are used in various fields.

In recent years, non-fluorine-based liquid-repellents have been proposed in consideration of energy saving, cost saving, tightening of regulations on long-chain fluoroalkyl compounds such as perfluorooctanoic acid (PFOA), and the like. Patent Documents 1 to 3 disclose, as the non-fluorine-based water repellent, a hydrocarbon-based water repellent comprising a non-fluorine polymer having a long-chain alkyl (meth)acrylate unit.

### [Citation List]

### [Patent Documents]

[Patent Document 1]
   Japanese Unexamined Patent Application, First Publication No. 2006-328624
[Patent Document 2]
   Japanese Unexamined Patent Application, First Publication No. 2015-172198
[Patent Document 3]
   Japanese Unexamined Patent Application, First Publication No. 2017-025440

### [Summary of Invention]

### [Technical Problem]

However, sufficient liquid repellency cannot be obtained with the water repellents disclosed in Patent Documents 1 to 3.

The present invention relates to a liquid-repellent composition which is hydrocarbon-based and can impart excellent liquid repellency; a method for treating a substrate using the liquid-repellent composition; and an article equipped with a coating film which is hydrocarbon-based and has excellent liquid repellency.

### [Solution to Problem]

The present invention has the following aspects.
[1] A liquid-repellent composition comprising a polymer (A) having a unit based on a monomer (a) represented by Formula (a),

   (R¹-Q¹-)HC=CH(-Q²-R²) Formula (a)

   in Formula (a), Q¹ and Q² each independently represent a divalent linking group, and
   R¹ and R² each independently represent a monovalent hydrocarbon group having 8 to 24 carbon atoms.
[2] The liquid-repellent composition according to [1],
   in which Q¹ and Q² of the monomer (a) are each independently one of the group consisting of-C(=O)-, -C(=O)-O-, -O-C(=O)-, and -C(=O)-NH-.
[3] The liquid-repellent composition according to [1] or [2],
   in which R¹ and R² of the monomer (a) are each independently a monovalent hydrocarbon group having 12 to 24 carbon atoms.
[4] The liquid-repellent composition according to any one of [1] to [3],
   in which the polymer (A) is a copolymer further having a unit based on the following monomer (b),
   monomer (b) is a monomer other than the monomer (a), the monomer having one polymerizable unsaturated group and an electron-donating group adjacent to the unsaturated group in one molecule.
[5] The liquid-repellent composition according to [4],
   in which the monomer (b) is a monomer (b 1) represented by Formula (b 1),

      CH₂=CHR³ Formula (b 1)
   in Formula (b 1), R³ is an electron-donating group.
[6] The liquid-repellent composition according to [5],
   in which the electron-donating group is at least one selected from the group consisting of an aliphatic hydrocarbon group which may have a substituent, -O-C(=O)-R⁴, -O-R⁴, and -NH-C(=O)-R⁴, in which R⁴ represents an aliphatic hydrocarbon group which may have a substituent.
[7] The liquid-repellent composition according to any one of [4] to [6],
   in which a proportion of the unit based on the monomer (a) is 5% to 80% by mass with respect to all constitutional units of the polymer (A).
[8] The liquid-repellent composition according to any one of [4] to [7],
   in which a proportion of the unit based on the monomer (b) is 20% to 95% by mass with respect to all constitutional units of the polymer (A).
[9] The liquid-repellent composition according to any one of [1] to [5],
   in which the polymer (A) is a copolymer further having a unit based on a monomer (c) represented by Formula (c),

      CH₂=CX¹X² Formula (c)
   in Formula (c), X¹ and X² each independently represent a halogen atom or a hydrogen atom, and X¹ and X² are not hydrogen atoms at the same time.
[10] The liquid-repellent composition according to [9],
   in which the monomer (c) is at least one selected from the group consisting of vinyl chloride and vinylidene chloride.
[11] The liquid-repellent composition according to any one of [1] to [10],
   in which the polymer (A) is a copolymer further having a unit based on a monomer (d) represented by Formula (d),

      CH₂=CR⁵C(=O)OR⁶ Formula (d)
   in Formula (d), R⁵ represents a hydrogen atom or a methyl group, and R⁶ represents a monovalent hydrocarbon group which may have a substituent.
[12] The liquid-repellent composition according to any one of [1] to [11],
   in which the polymer (A) is a copolymer further having a unit based on a monomer (e) having a crosslinkable functional group.
[13] The liquid-repellent composition according to any one of [1] to [12],
   in which the polymer (A) has no fluorine atom.
[14] A method for treating a substrate, the method comprising treating a substrate with the liquid-repellent composition according to any one of [1] to [13].
[15] An article comprising a substrate treated with the liquid-repellent composition according to any one of [1] to [13].

### [Advantageous Effects of Invention]

According to the present invention, provided are a liquid-repellent composition which is hydrocarbon-based and can impart excellent liquid repellency; a method for treating a substrate using the liquid-repellent composition; and an article equipped with a coating film which is hydrocarbon-based and has excellent liquid repellency.

### [Description of Embodiments]

In the present specification, the monomer represented by Formula (a) is also referred to as a monomer (a). Monomers represented by other formulae are also described in the same manner.

In the present specification, the compound represented by Formula (1) is also referred to as a compound (1). Compounds represented by other formulae are also described in the same manner.

The meanings and the definitions of the terms in the present invention are as follows.

The phrase "liquid repellency" means one or both of water repellency and oil repellency.

The phrase "unit based on a monomer" is a generic phrase for an atomic group directly formed by polymerizing one monomer molecule and an atomic group obtained by chemically converting a part of the atomic group.

The term "(meth)acrylate" is a generic term for an acrylate and a methacrylate.

The number-average molecular weight (Mn) and the mass-average molecular weight (Mw) of the polymer are polystyrene-equivalent molecular weights (Mw) obtained by GPC measurement using a calibration curve created using standard polymethyl methacrylate samples. GPC is an abbreviation for gel permeation chromatography.

The phrase "concentration of solid contents" is calculated by (Solid content mass/Sample mass) × 100, in which the mass of a sample before heating is defined as a sample mass and the mass of the sample after drying in a convection dryer at 120°C for 4 hours is defined as a solid content mass.

The term "ph" in the chemical formula represents a phenyl group.

"To" indicating a numerical range means that the numerical values before and after it are included as lower and upper limit values.

The numerical ranges for the amount and various physical property values disclosed in the present specification can be set to new numerical ranges by optionally combining the lower limit values and upper limit values thereof.

### [Liquid-Repellent Composition]

The liquid-repellent composition of the present invention (hereinafter also referred to as "the present composition") comprises the polymer (A). The present composition may comprise one kind of the polymer (A) alone or may comprise two or more kinds of the polymer (A).

### (Polymer (A))

The polymer (A) has a unit (hereinafter also referred to as a "unit (a))" based on the monomer (a).

(R¹-Q¹-)HC=CH(-Q²-R²) Formula (a)

In Formula (a), R¹ and R² each independently represent a monovalent hydrocarbon group having 8 to 24 carbon atoms. R¹ and R² may be the same as or different from each other.

Since the monovalent hydrocarbon group has 8 or more carbon atoms in R¹ and R², excellent liquid repellency is exhibited. Since the monovalent hydrocarbon group has 24 or less carbon atoms in R¹ and R², the film forming properties of the polymer (A) are excellent.

R¹ and R² are each independently preferably a monovalent hydrocarbon group having 12 to 24 carbon atoms, more preferably a monovalent hydrocarbon group having 12 to 22 carbon atoms, and still more preferably a monovalent hydrocarbon group having 14 to 20 carbon atoms.

As the monovalent hydrocarbon group, a monovalent aliphatic hydrocarbon group is preferable. The monovalent aliphatic hydrocarbon group may be linear or branched. In addition, the monovalent aliphatic hydrocarbon group may be a saturated hydrocarbon group or an unsaturated hydrocarbon group. The monovalent aliphatic hydrocarbon group is preferably a monovalent saturated hydrocarbon group, that is, an alkyl group, and more preferably a linear alkyl group.

Examples of the monovalent hydrocarbon group include a lauryl group, a myristyl group, a cetyl group, a stearyl group, an arachidyl group, a behenyl group, a 2-ethylhexyl group, an isostearyl group, and an oleyl group.

In Formula (a), Q¹ and Q² each independently represent a divalent linking group. Q¹ and Q² may be the same as or different from each other. Q¹ and Q² are preferably the same as each other.

It is preferable that Q¹ and Q² have a carbonyl group (-C(=O)-O)-) from the viewpoint of the polymerizable property of the monomer (a). For example, it is more preferable that Q¹ and Q² each independently have -C(=O)-, -C(=O)-O-, -O-C(=O)-, or - C(=O)-NH-.

From the viewpoint of excellent liquid repellency, as the monomer (a), the monomer (a1), the monomer (a2), the monomer (a3), and the monomer (a4) are preferable, and the monomer (a2) is more preferable.

R¹-C(=O)-CH=CH-C(=O)-R² Formula (a1)

R¹-O-C(=O)-CH=CH-C(=O)-O-R² Formula (a2)

R¹-NH-C(=O)-CH=CH-C(=O)-NH-R² Formula (a3)

R¹-C(=O)-O-CH=CH-O-C(=O)-R² Formula (a4)

In each formula, two R¹'s or two R²'s may be the same as or different from each other. In addition, the details and preferred aspects of R¹ and R² are the same as those described for Formula (a).

Examples of the monomer (a1) include trans-distearoyl ethylene, cis-distearoyl ethylene, trans-dilauryloyl ethylene, cis-dilauryloyl ethylene, trans-stearoyl lauroyl ethylene, and cis-stearoyl lauroyl ethylene.

Examples of the monomer (a2) include distearyl fumarate, distearyl maleate, diisostearyl fumarate, diisostearyl maleate, dilauryl fumarate, dilauryl maleate, di-2-ethylhexyl fumarate, di-2-ethylhexyl maleate, stearyl-2-ethylhexyl maleate, stearyl-2-ethylhexyl fumarate, stearyl lauryl maleate, and stearyl lauryl fumarate.

Examples of the monomer (a3) include distearyl fumaric acid amide, distearyl maleic acid amide, diisostearyl fumaric acid amide, diisostearyl maleic acid amide, di-2-ethylhexyl fumaric acid amide, stearyl-2-ethylhexyl fumaric acid amide, and stearyl-2-ethylhexyl maleic acid amide.

Examples of the monomer (a4) include vinylene distearate, vinylene dilaurate, vinylene-2-ethylhexanoate, vinylene diisostearate, vinylene stearate laurate, and vinylene distearate-2-ethylhexanoate.

As the monomer (a1), the monomer (a2), the monomer (a3), and the monomer (a4), commercially available products may be used or the monomers may be prepared by synthesis. In addition, each of these monomers may be used alone or a combination of two or more kinds thereof may be used.

The monomer (a1) can be produced by, for example, an alkylation reaction between a maleic acid ester, a maleic acid amide, a fumaric acid ester, or a fumaric acid amide, and an organic magnesium reagent having an alkyl group having 8 to 24 carbon atoms.

The monomer (a2) can be produced by, for example, reacting a compound (1) with either or both of a compound (2) and a compound (3) in the amount of 2 moles with respect to 1 mole of the compound (1) (esterification reaction).

Y¹-C(=O)-CH=CH-C(=O)-Y² Formula (1)

R¹-OH Formula (2)

R²-OH Formula (3)

It should be noted that Y¹ and Y² each independently represent a chlorine atom or a hydroxyl group.

The esterification reaction can be carried out by, for example, the methods described in paragraphs 0053 and 0054 of Japanese Unexamined Patent Application, First Publication No. 2009-84490. After the esterification reaction, purification of the reactant, and the like may be carried out, as necessary.

The monomer (a3) can be produced by, for example, an amidation reaction between maleic acid or fumaric acid and an amine having an alkyl group having 8 to 24 carbon atoms.

The monomer (a4) can be produced by, for example, an esterification reaction between glyoxal and an acid chloride having an alkyl group having 8 to 24 carbon atoms.

The polymer (A) may be a copolymer further having a unit (hereinafter also referred to as a "unit (b)") based on the following monomer (b).

monomer (b): a monomer other than the monomer (a), the monomer having one polymerizable unsaturated group and an electron-donating group adjacent to the unsaturated group in one molecule.

Since the monomer (b) has one polymerizable unsaturated group and an electron-donating group adjacent to the unsaturated group in one molecule, it has an excellent polymerization reactivity. In a case where the monomer (b) is used in the polymerization reaction of the polymer (A), the polymerization reaction of the monomer (a) having a relatively low polymerizable property easily proceeds.

The monomer (b) is not particularly limited as long as it is copolymerizable with the monomer (a).

As the monomer (b), a non-fluorine monomer having no fluorine atom is preferable. In a case where the polymer (A) comprises a unit (b) and the unit (b) is based on a non-fluorine monomer, the polymer (A) is easily allowed to be a non-fluorine polymer.

The following monomer (b 1) is preferable as the monomer (b).

CH₂=CHR³ Formula (b 1)

In Formula (b 1), R³ is an electron-donating group.

In Formula (b 1), the electron-donating group of R³ is not particularly limited as long as it is a group capable of donating an electron to an unsaturated double bond of the monomer (b 1). Examples of the electron-donating group of R³ include a hetero atom-containing group in which a hetero atom is bonded to a carbon atom having a double bond, an aliphatic hydrocarbon group which may have a substituent, and an aromatic hydrocarbon group which may have a substituent.

Examples of the hetero atom of the hetero atom-containing group include an oxygen atom, a nitrogen atom, a phosphorus atom, a sulfur atom, a silicon atom, and a boron atom. Among these, the oxygen atom and the nitrogen atom are preferable from the viewpoint of easy availability. In a case where the hetero atom is the oxygen atom, examples of the electron-donating hetero atom-containing group include an ether group and an ester group. In a case where the hetero atom is the nitrogen atom, examples of the electron-donating hetero atom-containing group include an amide bond and an amine group.

Examples of the aliphatic hydrocarbon group which may have a substituent include an alkyl group and an alkyl group having a substituent. Here, the number of carbon atoms in the alkyl group is not particularly limited. For example, the alkyl group may have 1 to 30 carbon atoms, may have 3 to 24 carbon atoms, or may have 4 to 20 carbon atoms. In addition, the aliphatic hydrocarbon group may be linear or branched.

In the alkyl group having a substituent, at least one unit of a methylene unit may be bonded to the carbon atom having a double bond represented by Formula (b 1), and the position at which the substituent is introduced is not particularly limited. In addition, the substituent is also not particularly limited. Examples of the substituent include a hydroxyl group, an ether group, a carboxyl group, an amino group, and an amide group.

Examples of the substituent in the aromatic hydrocarbon group which may have a substituent include a phenyl group, a styrene group, a pyridine group, a phenyl group having a substituent, a styrene group having a substituent, and a pyridine group having a substituent. In the aromatic hydrocarbon group having a substituent, at least one unit of a methylene unit or a phenyl group may be bonded to the carbon atom having a double bond represented by Formula (b 1), and the position at which the substituent is introduced is not particularly limited. In addition, the substituent is also not particularly limited. Examples of the substituent include a hydroxyl group, a carboxyl group, and an ether group.

In a case where R³ is a hetero atom-containing group, examples of the monomer (b1) include a vinyl ester, a vinyl ether, an amide, and a silane.

Examples of the vinyl ester include vinyl acetate, vinyl butyrate, vinyl pivalate, vinyl caproate, vinyl caprylate, vinyl laurate, vinyl stearate, vinyl benzoate, vinyl chloroacetate, divinyl adipic acid, vinyl trifluoroacetate, vinyl benzoate, and vinyl 2-ethylhexanoate.

Examples of the vinyl ether include methyl vinyl ether, ethyl vinyl ether, n-butyl vinyl ether, iso-butyl vinyl ether, tert-butyl vinyl ether, 4-hydroxybutyl vinyl ether, lauryl vinyl ether, stearyl vinyl ether, chloromethyl vinyl ether, 2-chloroethyl vinyl ether, chloropropyl vinyl ether, cyclohexyl vinyl ether, diethylene glycol divinyl ether, ethylene glycol monovinyl ether, and diethylene glycol monovinyl ether.

Examples of the amide include N-vinylacetamide, 1-vinyl-2-pyrrolidone, N-vinyl-ε-caprolactam, and N-vinylphthalimide.

Examples of the silane include trimethyl vinylsilane, dimethylphenyl vinylsilane, and diphenylmethyl vinylsilane.

In a case where R³ is an aliphatic hydrocarbon group which may have a substituent, examples of the monomer (b1) include an α-olefin which may have a substituent.

Examples of the α-olefin which may have a substituent include propylene, 1-hexene, 1-butene, 1-octadecene, allyl alcohol, allyl amine, allyl ether, allyl ester, and derivatives thereof.

Examples of the allyl ether include diallyl ether and 1,3-diallyloxy-2-propanol.

Examples of the allyl ester include allyl acetate and diallyl adipic acid.

In a case where R³ is an aromatic hydrocarbon group which may have a substituent, examples of the monomer (b1) include styrene, 4-methylstyrene, 4-hydroxystyrene, 4-methoxystyrene, and 4-vinyl benzoic acid.

As R³ of the monomer (b1), at least one selected from the group consisting of an aliphatic hydrocarbon group which may have a substituent, -O-C(=O)-R⁴, -O-R⁴, and - NH-C(=O)-R⁴ is preferable.

Here, R⁴ represents an aliphatic hydrocarbon group which may have a substituent. Examples of R⁴ include an alkyl group and an alkyl group having a substituent. In a case where R⁴ is the alkyl group, the number of carbon atoms is not particularly limited. For example, the number of carbon atoms may be 1 to 24, 4 to 20, or 12 to 18. R⁴ may be linear or branched.

The substituent in R⁴ can be the same substituent as that of "an aliphatic hydrocarbon group which may have a substituent" in R³ of Formula (b1). It should be noted that the substituent at R⁴ may have electron-withdrawing properties. Examples of the electron-withdrawing group include an ester group, an amide group, a carbamoyl group, a urea group, a thiourea group, and a sulfonamide group.

As the monomer (b1), from the viewpoint that the polymerizable property with the monomer (a) is better and better liquid repellency is obtained, a vinyl ester or a vinyl ether is preferable, vinyl acetate, vinyl pivalate, vinyl laurate, vinyl stearate, methyl vinyl ether, ethyl vinyl ether, n-butyl vinyl ether, 4-hydroxybutyl vinyl ether, stearyl vinyl ether, lauryl vinyl ether, or cyclohexyl vinyl ether is more preferable, vinyl acetate, vinyl laurate, vinyl stearate, 4-hydroxybutyl vinyl ether, lauryl vinyl ether, stearyl vinyl ether, or cyclohexyl vinyl ether is still more preferable, and vinyl acetate or vinyl stearate is particularly preferable.

The monomers (b) may be used alone or a combination of two or more kinds thereof may be used.

The polymer (A) may be a copolymer further having a unit (hereinafter also referred to as a "unit (c)") based on the following monomer (c).

CH₂=CX¹X² Formula (c)

In Formula (c), X¹ and X² each independently represent a halogen atom or a hydrogen atom, and X¹ and X² are not hydrogen atoms at the same time.

In a case where the polymer (A) has a unit (c), the film forming properties of the polymer (A) are easily improved on a substrate processed with a liquid-repellent composition.

As the halogen atom of X¹ or X², a chlorine atom is preferable. As the monomer (c), vinyl chloride or vinylidene chloride is preferable.

The monomers (c) may be used alone or a combination of two or more kinds thereof may be used.

The polymer (A) may be a copolymer further having a unit based on the following monomer (d).

CH₂=CR⁵C(=O)OR⁶ Formula (d)

In Formula (d), R⁵ represents a hydrogen atom or a methyl group, and R⁶ represents a monovalent hydrocarbon group which may have a substituent. The details and preferred aspects of the monovalent hydrocarbon group are the same as the contents described for R¹ and R².

The substituent which may be contained in R⁶ is not particularly limited as long as it is a substituent other than the crosslinkable functional group which will be described below. Examples thereof include an aliphatic hydrocarbon group and an aromatic group.

The monomer (d) is preferably a (meth)acrylate having an alkyl group having 1 to 24 carbon atoms, and more preferably a (meth)acrylate having an alkyl group having 4 to 22 carbon atoms. Examples of the (meth)acrylate include alkyl (meth)acrylates such as butyl (meth)acrylate, hexyl (meth)acrylate, 2-ethylhexyl (meth)acrylate, lauryl (meth)acrylate, myristyl (meth)acrylate, cetyl (meth)acrylate, stearyl (meth)acrylate, arachidyl (meth)acrylate, and behenyl (meth)acrylate. As the monomer (d), 2-ethylhexyl (meth)acrylate, lauryl (meth)acrylate, cetyl (meth)acrylate, stearyl (meth)acrylate, or behenyl (meth)acrylate is preferable from the viewpoint of obtaining better liquid repellency.

The monomers (d) may be used alone or a combination of two or more kinds thereof may be used.

The polymer (A) may be a copolymer further having a unit based on the monomer (e) having a crosslinkable functional group. The monomer (e) is a monomer other than the monomer (a), the monomer (b), the monomer (c), and the monomer (d).

As the crosslinkable functional group of the monomer (e), a functional group having at least one bond of a covalent bond, an ionic bond, or a hydrogen bond, and a functional group capable of forming a crosslinked structure by the interaction of the bonds are preferable.

From the viewpoint of excellent washing durability, as the crosslinkable functional group, an isocyanate group, a blocked isocyanate group, an alkoxysilyl group, an amino group, an alkoxymethylamide group, a methylol group, a silanol group, an ammonium group, an amide group, an epoxy group, a hydroxyl group, an oxazoline group, a carboxy group, an alkenyl group, or a sulfonic acid group is preferable. Among those, the epoxy group, the hydroxyl group, the blocked isocyanate group, the alkoxysilyl group, the amino group, or the carboxy group is more preferable.

Examples of the monomer (e) include a (meth)acrylate (provided that the monomer (d) is excluded), an acrylamide, a vinyl ether, and a vinyl ester.

From the viewpoint of excellent washing durability, as the monomer (e), N-methylol (meth)acrylamide, N-butoxymethyl (meth)acrylamide, 2-hydroxyethyl (meth)acrylate, 4-hydroxybutyl (meth)acrylate, a 3,5-dimethylpyrazole adduct of 2-isocyanatoethyl (meth)acrylate, a 2-butanone oxime adduct of 2-isocyanatoethyl (meth)acrylate, a 3,5-dimethylpyrazole adduct of 3-isocyanatopropyl (meth)acrylate, a 2-butanone oxime adduct of 3-isocyanatopropyl (meth)acrylate, 3-chloro-2-hydroxypropyl (meth)acrylate, diacetone acrylamide, glycidyl methacrylate, glycerol (meth)acrylate, a polycaprolactone ester of hydroxyethyl (meth)acrylate, a urethane prepolymer of phenylglycidyl acrylate and tolylene diisocyanate (AT-600 manufactured by Kyoeisha Chemical Co., Ltd.), or 2-[1,3,3-trimethyl-5-(1-methylpropylideneaminoxycarbonylamino)-1-cyclohexylmethylaminocarbonyloxy]ethyl methacrylate (TECHCOAT HE-6P manufactured by Kyoken Kasei) is preferable, N-methylol (meth)acrylamide, 2-hydroxyethyl (meth)acrylate, a 3,5-dimethylpyrazole adduct of 2-isocyanatoethyl (meth)acrylate, a 2-butanone oxime adduct of 2-isocyanatoethyl (meth)acrylate, 3-chloro-2-hydroxypropyl (meth)acrylate, diacetone acrylamide, or glycidyl methacrylate is more preferable, and N-methylol (meth)acrylamide, 2-hydroxyethyl (meth)acrylate, a 3,5-dimethylpyrazole adduct of 2-isocyanatoethyl (meth)acrylate, 3-chloro-2-hydroxypropyl (meth)acrylate, or diacetone acrylamide is still more preferable.

The monomers (e) may be used alone or a combination of two or more kinds thereof may be used.

It is preferable that the polymer (A) has no fluorine atom from the viewpoint of allowing the present composition to be a non-fluorine-based water repellent. The polymer (A) in a case where it has no fluorine atom can be obtained by performing a polymerization reaction of monomer components comprising the monomers (a) having no fluorine atom, and as necessary, monomers having no fluorine atom other than the monomers (a).

The polymer (A) may be a homopolymer of the monomers (a); or may be a copolymer of the monomer (a) and at least one selected from the group consisting of the monomer (b), the monomer (c), the monomer (d), and the monomer (e). As the polymer (A), a copolymer of the monomer (a), the monomer (b), the monomer (c), the monomer (d), and the monomer (e) are preferable.

It should be noted that as long as the polymer (A) does not impair the effects of the invention, the polymer (A) may further have units (hereinafter referred to as "other monomer units") based on monomers other than the monomer (a), the monomer (b), the monomer (c), the monomer (d), and the monomer (e).

Examples of such other monomers include norbornene, dicyclopentadiene, and maleic acid anhydride.

The proportion of the unit (a) is preferably 60% by mass or more, and more preferably 70% by mass or more with respect to all the constitutional units of the polymer (A), and may be 100% by mass. In a case where the proportion of the unit (a) is equal to or more than the lower limit value, the liquid repellency is excellent.

In a case where the polymer (A) is a copolymer having the unit (b), the proportion of the unit (a) is preferably 5% to 80% by mass, more preferably 8 to 70% by mass, and still more preferably 10% to 60% by mass with respect to all the constitutional units of the polymer (A). In a case where the proportion of the unit (a) is equal to or more than the lower limit value of the numerical range, the liquid repellency is excellent. In a case where the proportion of the unit (a) is equal to or less than the upper limit value of the numerical range, it is easy to secure the reactivity of the polymer (A) in the polymerization reaction.

In a case where the polymer (A) is a copolymer having the unit (b), the proportion of the unit (b) is preferably 20% to 95% by mass, more preferably 25% to 85% by mass, and still more preferably 30% to 80% by mass with respect to all the constitutional units of the polymer (A). In a case where the proportion of the unit (b) is equal to or more than the lower limit value of the numerical range, the reactivity of the polymer (A) in the polymerization reaction is more excellent. In a case where the proportion of the unit (b) is equal to or less than the upper limit value of the numerical range, it is easy to secure the liquid repellency.

In a case where the polymer (A) is a copolymer having the unit (c), the proportion of the unit (c) is preferably 1% to 30% by mass, more preferably 3% to 25% by mass, and still more preferably 5% to 20% by mass with respect to all the constitutional units of the polymer (A). In a case where the proportion of the unit (c) is equal to or more than the lower limit value of the numerical range, the film forming properties of the polymer (A) are more excellent. In a case where the proportion of the unit (c) is equal to or less than the upper limit value of the numerical range, it is easy to secure the liquid repellency.

In a case where the polymer (A) is a copolymer having the unit (d), the proportion of the unit (d) is preferably 0.1% to 25% by mass, more preferably 0.5% to 20% by mass, and still more preferably 1% to 15% by mass with respect to all the constitutional units of the polymer (A). In a case where the proportion of the unit (d) is equal to or more than the lower limit value of the numerical range, the water repellency is more excellent. In a case where the proportion of the unit (d) is equal to or less than the upper limit value of the numerical range, it is easy to enhance the stability of emulsified particles of a polymer formed by emulsion polymerization.

In a case where the polymer (A) is a copolymer having the unit (e), the proportion of the unit (e) is preferably 0.1% to 25% by mass, more preferably 0.5% to 20% by mass, and still more preferably 1% to 15% by mass with respect to all the constitutional units of the polymer (A). In a case where the proportion of the unit (e) is equal to or more than the lower limit value of the numerical range, the washing durability is more excellent. In a case where the proportion of the unit (e) is equal to or less than the upper limit value of the numerical range, it is easy to have good film forming properties of the polymer (A).

In a case where the polymer (A) is a copolymer having other monomer units, the proportion of such other monomer units is preferably 0% to 20% by mass, more preferably 1% to 15% by mass, and still more preferably 5% to 10% by mass with respect to all the constitutional units of the polymer (A). In a case where the proportion of such other monomer units is equal to or more than the lower limit value of the numerical range, it is easy to impart the characteristics of such other monomers to the polymer (A). In a case where the proportion of such other monomer units is equal to or less than the upper limit value of the numerical range, the effects of the invention are not easily impaired.

The proportion of each unit can be calculated by ¹H-NMR and a reaction rate of each monomer component by gas chromatography. In a case where the conversion rate of the monomer component to the polymer (A) is high (for example, 90% or more) during the production of the polymer (A), the proportion of each unit may be calculated based on the charged amount of the monomer components.

The Mw of the polymer (A) is not particularly limited. For example, the Mw may be 5,000 to 100,000, may be 7,000 to 80,000, or may be 10,000 to 100,000.

In a case where the Mw of the polymer (A) is equal to or more than the lower limit value of the numerical range, the liquid repellency is more excellent. In a case where the Mw of the polymer (A) is equal to or less than the upper limit value of the numerical range, the solubility in a liquid-state solvent is excellent.

The Mn of the polymer (A) is preferably 2,500 to 50,000, more preferably 3,500 to 40,000, and still more preferably 5,000 to 25,000. In a case where the Mn of the polymer (A) is equal to or more than the lower limit value of the numerical range, the liquid repellency is more excellent. In a case where the Mn of the polymer (A) is equal to or less than the upper limit value of the numerical range, the film forming properties of the polymer (A) are more excellent.

### (Liquid Medium)

It is preferable that the present composition further comprises a liquid medium from the viewpoint of coatability.

Examples of the liquid medium include water, an organic solvent, and an aqueous medium.

Examples of the organic solvent include a water-soluble organic solvent, a ketone, a compound having an amide bond, a compound having an ether bond and no hydroxyl group, and an aromatic hydrocarbon compound. The water-soluble organic solvent will be described later.

Examples of the ketone include acetone, methyl ethyl ketone, methyl isobutyl ketone, and cyclohexanone.

Examples of the compound having an amide bond include dimethylacetamide, 3-methoxy-dimethylpropanamide, 3-butoxydimethylpropanamide, and methylpyrrolidone. Examples of the compound having an ether bond and no hydroxyl group include tetrahydrofuran, dipropylene glycol dimethyl ether, triethylene glycol dimethyl ether, tetraethylene glycol dimethyl ether, and cyclopentyl methyl ether. Examples of the aromatic hydrocarbon compounds include toluene and xylene.

The organic solvents may be used alone or a combination of two or more kinds thereof may be used.

Among those, as the organic solvent, a solvent capable of dissolving or dispersing the polymer (A) is preferable, and a solvent capable of dissolving the polymer (A) is more preferable. From the viewpoint of good compatibility with the polymer (A), as the organic solvent, the ketone; or the compound having an ether bond and no hydroxyl group is preferable, and acetone, methyl ethyl ketone, methyl isobutyl ketone, cyclohexanone, tetrahydrofuran, or cyclopentyl methyl ether is more preferable.

Examples of the aqueous medium include a water-soluble organic solvent and a mixture of water and a water-soluble organic solvent.

The water-soluble organic solvent is an organic solvent which is miscible with water in any proportion. The water-soluble organic solvent may be a compound selected from the group consisting of the above-mentioned ketone, compound having an amide bond, compound having an ether bond and no hydroxyl group, and aromatic hydrocarbon compound as long as these compounds are miscible with water in any proportion. As the water-soluble organic solvent, at least one selected from the group consisting of an alcohol (provided that an ether alcohol is excluded), an ether alcohol, and an aprotic polar solvent is preferable.

Examples of the alcohol include t-butanol and propylene glycol.

Examples of the ether alcohol include 1-methoxy-2-propanol, 3-methoxymethylbutanol, dipropylene glycol, dipropylene glycol monomethyl ether, and tripropylene glycol.

Examples of the aprotic polar solvent include N,N-dimethylformamide, dimethylsulfoxide, tetrahydrofuran, acetonitrile, acetone, 3-methoxy-N,N-dimethylpropanamide, 3-butoxy-N,N-dimethylpropanamide, 3-methoxy-3-methyl-1-butanol, triethylene glycol dimethyl ether, and tetraethylene glycol dimethyl ether.

The aqueous media may be used alone or a combination of two or more kinds thereof may be used.

In a case where the aqueous medium is a mixture of water and a water-soluble organic solvent, the amount of the water-soluble organic solvent is preferably 1 to 80 parts by mass, and more preferably 5 to 60 parts by mass with respect to 100 parts by mass of water.

### (Low-Molecular-Weight Component)

The present composition may further comprise a low-molecular-weight component having an Mw of less than 5,000. In a case where the polymerizable properties of the monomer (a) are difficult to be obtained in one embodiment, a low-molecular-weight component having an MW of less than 5,000 may contribute to the development of the liquid repellency. In this case, a component having an Mw of 5,000 or more is referred to as a polymer component.

Examples of the low-molecular-weight component include the above-mentioned monomer (a), monomer (b), monomer (c), monomer (d), monomer (e), and polymer (A) having an Mw of less than 5,000. The details and the preferred aspects of each monomer are as described above. Each of the monomer and the polymer (A) as the low-molecular-weight component may be used alone or a combination of two or more kinds thereof may be used.

In a case where the present composition comprises the monomer (a) as the low-molecular-weight component, the monomer (a) in the present composition and the monomer (a) that forms a unit (a) of the polymer (A) may be the same as or different from each other.

The Mw of the polymer (A) as the low-molecular-weight component is preferably 1,000 or more and less than 5,000, more preferably 1,200 to 4,800, and still more preferably 1,500 to 3,000. The Mn of the polymer (A) as the low-molecular-weight component is preferably 500 to 2,500, and more preferably 750 to 1,500.

The polymer (A) as the low-molecular-weight component may further have at least one selected from the group consisting of the unit (b), the unit (c), the unit (d), and the unit (e), as necessary. The proportion of each unit in the polymer (A) as the low-molecular-weight component, the details and the preferred aspects of the copolymerization composition are the same as those described for the polymer (A).

### (Other Components)

The present composition may further comprise components other than the polymer (A), the low-molecular-weight component, and the liquid medium, as necessary.

Examples of such other components include a surfactant, another polymer other than the polymer (A), a non-fluorine-based water-and-oil repellent, a water-soluble polymer resin, a crosslinking agent, a catalyst, a wetting agent, an antifoaming agent, a film forming aid, an insect proof agent, a flame retardant, an antistatic agent, a wrinkle free finishing agent, a softening agent, a pH adjuster, a paper strength agent, a water resistant agent, a sizing agent, an organic filler, an inorganic filler, a supporting agent, a coagulant, a buffer, a bactericidal agent, a biocidal agent, and a metal ion blocking agent. In addition, examples of such other components include, without limitation, various additives described in Japanese Unexamined Patent Application, First Publication No. 2006-328624, Japanese Unexamined Patent Application, First Publication No. 2015-172198, and Japanese Unexamined Patent Application, First Publication No. 2017-025440.

Such other components may be used alone or a combination of two or more kinds thereof may be used.

As the surfactant, a surfactant having no fluorine atom is preferable.

Examples of the surfactant include an anionic surfactant, a nonionic surfactant, a cationic surfactant, and an amphoteric surfactant. These various surfactants may be used alone or a combination of two or more kinds thereof may be used.

From the viewpoint that the dispersion stability of an aqueous dispersion comprising the polymer (A) is excellent, as the surfactant, the nonionic surfactant alone, a combination of the nonionic surfactant and a cationic surfactant, a combination of the nonionic surfactant and the amphoteric surfactant, or the anionic surfactant alone is preferably used, and the combination of the nonionic surfactant and the cationic surfactant is more preferably used.

The ratio of the nonionic surfactant to the cationic surfactant (nonionic surfactant/cationic surfactant) is preferably 100/0 to 40/60 (mass ratio), and more preferably 97/3 to 40/60 (mass ratio).

In a specific combination of the nonionic surfactant and the cationic surfactant, the total amount of the surfactant with respect to 100 parts by mass of the polymer (A) may be 5 parts by mass or less. In this case, it is easy to reduce an adverse effect on the liquid repellency of an article treated with the present composition, caused by the surfactant.

Examples of the nonionic surfactant include the surfactants s¹ to s⁶ described in paragraphs [0067] to [0095] of Japanese Unexamined Patent Application, First Publication No. 2009-215370.

As the surfactant s¹, a polyoxyethylene alkyl ether is preferable.

As the surfactant s², an acetylene glycol ethylene oxide adduct is preferable.

As the surfactant s³, an ethylene oxide-propylene oxide polymer is preferable.

Examples of the cationic surfactant include the surfactant s⁷ described in paragraphs [0096] to [0100] of Japanese Unexamined Patent Application, First Publication No. 2009-215370.

As the surfactant s⁷, an ammonium salt in which one or more hydrogen atoms bonded to a nitrogen atom are substituted with an alkyl group, an alkenyl group, or a polyoxyalkylene chain having a hydroxyl group at a terminal is preferable, and a compound (4) is more preferable.

[(R⁷)₄N⁺]Z⁻ Formula (4)

It should be noted that R⁷ is a hydrogen atom, an alkyl group having 1 to 22 carbon atoms, an alkenyl group having 2 to 22 carbon atoms, or a polyoxyalkylene chain having a hydroxyl group at a terminal. Four R⁷'s may be the same as or different from each other, but the four R⁷'s are not hydrogen atoms at the same time.

Z⁻ is a counter ion. Examples of Z⁻ include a chlorine ion, an ethyl sulfate ion, and an acetate ion.

Examples of the compound (4) include monostearyl trimethyl ammonium chloride, monostearyl dimethyl monoethylammonium ethyl sulfate, mono(stearyl) monomethyl di(polyethylene glycol) ammonium chloride, di(tallow alkyl) dimethyl ammonium chloride, and dimethylmonococonutamine acetate.

Examples of the amphoteric surfactant include the surfactant s⁸ described in paragraphs [0101] and [0102] of Japanese Unexamined Patent Application, First Publication No. 2009-215370.

From a viewpoint that the adverse effect of the liquid repellency of an article treated with the present composition is less and the dispersion stability of a dispersion comprising the polymer (A) is excellent, as the combination of the surfactants, a combination of the surfactant s¹, the surfactant s², and the surfactant s⁷, a combination of the surfactant s¹, the surfactant s³, and the surfactant s⁷, or a combination of the surfactant s¹, the surfactant s², the surfactant s³, and the surfactant s⁷ is preferable. In these combinations, the surfactant s⁷ is more preferably the compound (4).

Examples of such another polymer other than the polymer (A) include a polymer (hereinafter also referred to as a "polymer (B)") which has at least one selected from the group consisting of the unit (b), the unit (c), the unit (d), the unit (e), and another monomer unit, and has no unit (a).

The Mw of the polymer (B) may be Mw of 5,000 to 100,000, and may be 10,000 to 80,000. The Mn of the polymer (B) may be 2,500 to 50,000, and may be 5,000 to 40,000.

Examples of the water-soluble polymer resin include a hydrophilic polyester and a derivative thereof, and a hydrophilic polyethylene glycol and a derivative thereof. The water-soluble polymer resins may be used alone or a combination of two or more kinds thereof may be used.

Examples of the crosslinking agent include the crosslinking agents described in paragraphs [0060] to [0063] of PCT International Publication No. WO2019/172021.

Examples of the catalyst include the crosslinking agents described in paragraph [0064] of PCT International Publication No. WO2019/172021.

The crosslinking agents and the catalysts may be used alone or a combination of two or more kinds thereof may be used.

### (Amount of Each Component)

In a case where the present composition comprises a liquid medium, the amount of the liquid medium can be appropriately selected according to a desired concentration of solid contents of the present composition.

The concentration of solid contents of the present composition is preferably 0.1% to 7% by mass, and more preferably 0.2% to 5% by mass in a case where the composition is used for treating an article.

The amount of the polymer (A) in the present composition is preferably 60% by mass or more, and more preferably 70% by mass or more, and may be 100% by mass with respect to 100% by mass of the solid contents of the present composition. In a case where the amount of the polymer (A) is within the numerical range, it is easy to obtain liquid repellency in a case where an article is treated with the present composition.

The total amount of the low-molecular-weight components in the present composition is preferably 0% to 30% by mass, more preferably 0.1% to 25% by mass, still more preferably 0.5% to 20% by mass, and particularly preferably 1.0% to 15% by mass with respect to a total mass of the high-molecular-weight component and the low-molecular-weight component. In a case where the amount of the low-molecular-weight component is within the numerical range, it is easy to obtain oil repellency in a case where an article is treated with the present composition.

The amount of the monomer (a) as the low-molecular-weight component is preferably 0% to 30% by mass, more preferably 0.1% to 25% by mass, still more preferably 0.5% to 20% by mass, and particularly preferably 1.0% to 15% by mass, with respect to the total mass of the high-molecular-weight component and the low-molecular-weight component. In a case where the amount of the monomer (a) is within the numerical range, it is easy to obtain oil repellency in a case where an article is treated with the present composition.

The amount of the polymer (A) as the low-molecular-weight component is preferably 0% to 30% by mass, more preferably 0.1% to 25% by mass, still more preferably 0.5% to 20% by mass, and particularly preferably 1.0% to 15% by mass with respect to the total mass of the high-molecular-weight component and the low-molecular-weight component. In a case where the amount of the polymer (A) as the low-molecular-weight component is within the numerical range, it is easy to obtain oil repellency in a case where an article is treated with the present composition.

The total amount of the high-molecular-weight component and the low-molecular-weight component is preferably 60% by mass or more, and more preferably 70% by mass or more with respect to 100% by mass of the solid contents of the present composition, and may be 100% by mass.

The amount of the polymer (A) is preferably 0.01% to 50% by mass, more preferably 0.05% to 40% by mass, and still more preferably 0.1% to 35% by mass with respect to 100% by mass of the present composition. In a case where the amount of the polymer (A) is equal to or more than the lower limit value of the numerical range, it is easy to impart liquid repellency to an article by using the present composition. In a case where the amount of the polymer (A) is equal to or less than the upper limit value of the numerical range, the temporary stability in a solution of the polymer (A) and emulsified particles of the polymer (A) is easily improved.

### (Method for Producing Liquid-Repellent Composition)

The present composition can be produced by, for example, a method in which a monomer component comprising at least the monomer (a) is polymerized in the presence of a polymerization initiator.

The monomer component may further comprise at least one selected from the group consisting of the monomer (b), the monomer (c), the monomer (d), the monomer (e), and another monomer.

The details and the preferred aspects of each monomer are as described above. In addition, the details and the preferred aspects of the proportion of each monomer in the monomer component are the same as those for describing the proportion of each unit of the polymer (A).

Examples of the polymerization initiator include a thermal polymerization initiator, a photopolymerization initiator, a radiation polymerization initiator, a radical polymerization initiator, and an ionic polymerization initiator. Among these, the radical polymerization initiator is preferable. As the radical polymerization initiator, for example, an azo-based polymerization initiator, a peroxide-based polymerization initiator, or a redox-based initiator is used depending on a polymerization temperature. As the radical polymerization initiator, the azo-based compound is preferable, and a salt of the azo-based compound is more preferable. The polymerization temperature is preferably 20°C to 150°C.

The amount of the polymerization initiator used is preferably 0.1 to 5 parts by mass, and more preferably 0.1 to 3 parts by mass with respect to 100 parts by mass of the monomer component.

A molecular weight adjuster may be used for polymerizing the monomer components. Examples of the molecular weight adjuster include an aromatic compound, a mercaptoalcohol, a mercaptocarboxylic acid, and an alkyl mercaptan. Among those, the mercaptocarboxylic acid and the alkyl mercaptan are preferable. Examples of the molecular weight adjuster include mercaptoethanol, mercaptopropionic acid, n-octyl mercaptan, n-dodecyl mercaptan, tert-dodecyl mercaptan, stearyl mercaptan, and an α-methylstyrene dimer (CH₂=C(Ph)CH₂C(CH₃)₂Ph).

The amount of the molecular weight adjuster used is preferably 5 parts by mass or less, and more preferably 2 parts by mass or less, and may be 0 parts by mass with respect to 100 parts by mass of the monomer component.

Examples of a method for polymerizing the monomer components include an emulsion polymerization method, a solution polymerization method, a suspension polymerization method, and a bulk polymerization method. Among these, the emulsion polymerization method, the solution polymerization method, and the bulk polymerization method are preferable. The emulsion polymerization can be carried out by, for example, the methods each described in Japanese Unexamined Patent Application, First Publication No. H08-3113, Japanese Unexamined Patent Application, First Publication No. 2006-328624, Japanese Unexamined Patent Application, First Publication No. 2015-172198, and Japanese Unexamined Patent Application, First Publication No. 2017-025440. The solution polymerization can be carried out by, for example, the method described in PCT International Publication No. WO2020/045407.

After the polymerization, other components or a liquid medium may be added, as necessary.

### (Mechanism of Action)

Since the present composition described above comprises the polymer (A) having the unit (a), it expresses excellent liquid repellency while being hydrocarbon-based.

In the related art, in a non-fluorine polymer having a long-chain alkyl (meth)acrylate unit, which has been proposed as a hydrocarbon-based water repellent, a methylene group is present in the main chain in a case where the long-chain alkyl (meth)acrylate units are polymerized. Therefore, it is considered that sufficient liquid repellency was not expressed since the long-chain alkyl groups, which were side chains, were apart from each other.

In the present composition, no methylene group is present in the main chain in a case where the monomers (a) are polymerized. Therefore, it is considered that a monovalent hydrocarbon group having 8 to 24 carbon atoms, which is a side chain of the unit (a), is present at a shorter distance than in a case where a long-chain alkyl (meth)acrylate unit in the related art is polymerized, and as a result, excellent liquid repellency is expressed.

### [Method For Treating Substrate]

In the method for treating a substrate of the present invention, a substrate is treated with the present composition.

Examples of the substrate include fibers, fabrics, textile products, glass, silicon wafers, paper substrates, wood, leather, artificial leather, stone, concrete, ceramics, metals, metal oxides, ceramic products, resin molded products, and porous articles.

Examples of the fabrics include a woven fabric, a knitted fabric, a non-woven fabric, and a brushed fabric.

Examples of the textile product include clothing such as ski wear, rain wear, coats, blousons, windbreakers, down jackets, sportswear, work clothes, uniforms, and protective clothing, backpacks, bags, and tents.

Examples of the paper include paper, paperboard, a pulp mold, synthetic paper using synthetic fibers as at least a part of a raw material, and related products thereof.

The porous article is used as, for example, a filter. Examples of the material of the porous article include polypropylene, polyethylene terephthalate, polytetrafluoroethylene, glass fibers, cellulose nanofibers, carbon fibers, and cellulose acetate.

In a case where the substrate is a fiber, a fabric, or a textile product comprising the fabric, the type of the fiber is not particularly limited. For example, natural fibers such as cotton, wool, silk, and cellulose; synthetic fibers such as a polyester, a polyamide, an acryl, and an aramid; recycled fibers such as rayon, viscose rayon, and lyocell; blended fibers of natural fibers and synthetic fibers; and a blended fiber of natural fibers and recycled fibers.

Examples of the material in a case where the substrate is a non-woven fabric include polyethylene, polypropylene, polyolefin, polyethylene terephthalate, polytetrafluoroethylene, glass, and rayon.

The thickness of the fiber cloth is not particularly limited. For example, the thickness is 0.01 to 5 mm.

The treatment method may be any method as long as the present composition can be adhered to a substrate. In a case where the present composition comprises a liquid medium, examples of the method include a method in which a substrate is treated with the present composition by various treatment methods of coating, impregnating, immersion, spraying, brush coating padding, size pressing, and rollers, and dried.

The amount of the solid content in the present composition to be adhered to the substrate is not particularly limited. For example, in a case of the fiber cloth, the amount of the solid content is 0.001 to 0.05 g per gram of the fiber cloth is preferable.

Drying may be performed at room temperature or by heating, and is preferably performed by heating. In a case of the heating, the heating temperature is not particularly limited, but is, for example, 80°C to 200°C.

### [Article]

The article of the present invention has a substrate treated with the present composition. Therefore, the article of the present invention comprises a coating film having excellent liquid repellency. The details and the preferred aspects of the substrate are the same as those described for the method for treating the substrate. The article of the present invention can be produced by, for example, the above-described method for treating a substrate.

### [Examples]

Hereinafter, the present invention will be described in detail with reference to Examples, but the present invention is not limited thereto. "Part" means "part by mass".

Examples 1 to 3 and Examples 7 to 11 are Examples. Examples 4 to 6 and Example 12 are Comparative Examples.

### [Abbreviations]

Monomer (a):
   DSTF: Distearyl fumarate
Monomer (b):
   VSt: Vinyl stearate
Monomer (c):
   VdCl: Vinylidene chloride
Monomer (d):
   STA: Stearyl acrylate
Monomer (e):
   MOI-BP: 3,5-Dimethylpyrazole adduct of 2-isocyanatoethyl methacrylate (the following compound (5))

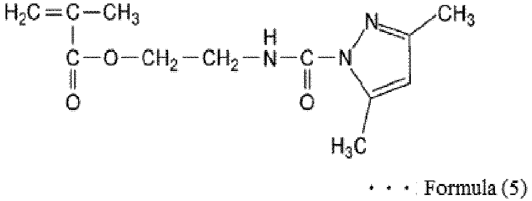

Poly-DSTF: Polydistearyl fumarate (Mw: 14,000, Mn: 10,000)
PMMA: Polymethyl methacrylate (Mw: 40,000, Mn: 28,000)
Poly-STA: Polystearyl acrylate (Mw: 19,000, Mn: 11,000)

Polymerization initiator:
   VA-061A: 10% by mass aqueous solution of acetate of 2,2'-azobis[2-(2-imidazolin-2-yl)propane] (VA-061 manufactured by Fujifilm Wako Pure Chemical Corporation)
Molecular weight adjuster:
   nStSH: n-Octadecyl mercaptan
Surfactant s¹:
   E-420: Polyoxyethylene (13) oleyl ether (EMULGEN 420 manufactured by Kao Corporation)
Surfactant s³:
   P-204: Ethylene oxide-propylene oxide polymer (PLONON 204 manufactured by Nippon Oil & Fats Co., Ltd.)
Surfactant s⁷:
   AQ-18: Stearyltrimethylammonium chloride (LIPOQUAD 18-63 manufactured by Lion Specialty Chemicals Co., Ltd., isopropyl alcohol solution with 63% by mass of active ingredients)
Liquid medium:
   DPG: Dipropylene glycol
Crosslinking agent:
   Meikanate TP-10: Blocked isocyanate (manufactured by Meisei Chemical Works, Ltd.)

### [Measurement Method and Evaluation Method]

### (Mw and Mn of Polymer (A))

A solution of the polymer dissolved in tetrahydrofuran such that a concentration of the polymer was 1.0% by mass was passed through a filter having a pore size of 0.2 µm to obtain an analysis sample. The Mw and the Mn were measured for the analysis sample. The molecular weight distribution was determined as a value (Mw/Mn) of the Mw with respect to the Mn. The measurement conditions are as follows.
- Device: HLC-8220GPC manufactured by Tosoh Corporation
- Columns: TSKgel SuperHZ-4000, TSKgel SuperHZ-3000, TSKgel SuperHZ-2500, and TSKgel SuperHZ-2000 were used in series.
- Measurement temperature: 40°C
- Injection volume: 40 µL
- Outflow rate: 0.35 mL/min
- Eluent: Tetrahydrofuran
- Standard sample: PStquick Kit-M (standard polystyrene sample with a known molecular weight) manufactured by Tosoh Corporation

### (Test Cloth for Evaluation of Water Repellency and Washing Durability)

A dyed nylon cloth, a PET cloth, and a cotton were each immersed in the liquid-repellent composition of each Example and squeezed to have a wet pickup of 60% by mass. Subsequently, all of them were dried at 110°C for 90 seconds and then dried at 170°C for 60 seconds to obtain a test cloth.

### (Water Repellency)

The test cloth was evaluated for water repellency according to a JIS L1092-2009 spray test. The water repellency was expressed in five grades from 1 to 5. The higher the score, the better the water repellency. A grade marked with "+" indicates that the respective properties are slightly better than the standard grade of the corresponding grade. A grade marked with "-" indicates that the respective properties are slightly poorer than the standard grade of the corresponding grade.

### (Washing Durability)

For the test cloth, washing was repeated 20 times or 50 times according to the washing method of Appendix 103 of JIS L 0217. After washing, the test cloth was air-dried overnight in a room at a room temperature of 25°C and a humidity of 60%, and as described above, the water repellency of the test cloth was evaluated as the washing durability.

### [Synthesis Example 1: Synthesis of DSTF]

56.8 g (210 mmol) of stearyl alcohol, 30.4 g (300 mmol) of triethylamine, and 400 mL of chloroform were put into a 1 L three-necked flask to obtain a first mixture. Subsequently, a second mixture of 15.3 g (100 mmol) of fumaryl chloride and 100 mL of chloroform was added dropwise to the first mixture at 0°C in a nitrogen atmosphere. Then, the mixture was stirred at room temperature for 1 hour to obtain a reaction mixture. The obtained reaction mixture was transferred to a 1 L separatory funnel, and the organic layer was washed with a 1 N aqueous hydrochloric acid solution and then with saturated brine. The obtained organic layer was dried over sodium sulfate, concentrated, and then purified by silica gel column chromatography using chloroform:hexane = 5:5 (volume ratio) as a developing solvent to obtain DSTF.

The yield amount was 14.6 g and the yield was 25%. The ¹H-NMR spectrum of the obtained DSTF is shown below.

¹H-NMR (solvent: CDCl₃, 400 MHz): δ 6.85 ppm (2H, s), δ 4.19 ppm (4H, t, J = 6.8 Hz), δ 1.71-1.64 ppm (4H, m), δ 1.39-1.22 ppm (60H, m), δ 0.88 ppm (6H, t, J = 6.8 Hz)

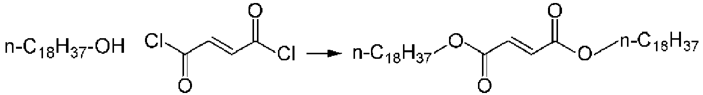

### [Synthesis Example 2: Synthesis of Poly-DSTF]

1 g of DSTF and 0.01 g of dimethyl-2,2'-azobis(2-methylpropionate) (manufactured by FUJIFILM Wako Pure Chemical Corporation) were put into a 30 mL ampule tube and shaken at 80°C for 24 hours. The obtained crude liquid was added dropwise to methanol, and the precipitate was separated by filtration to obtain Poly-DSTF in the form of a white solid.

### [Examples 1 to 6]

The high-molecular-weight component and the low-molecular-weight component were dissolved in cyclopentyl methyl ether according to the formulation shown in Table 1 to obtain an oil-repellent composition having a solid content of 1% by mass.

The oil-repellent composition was applied by a spin coating on a surface of a silicon wafer in 3 cm long × 3 cm wide washed with isopropyl alcohol, and dried at 40°C for 1 hour to form a coating film.

Static contact angles (hereinafter also referred to as a "hexadecane contact angle") with respect to n-hexadecane were measured at three points (a central portion, a left end portion, and a right end portion) of the formed coating film surface, and an average value of the three points was determined. The hexadecane contact angle was measured for each liquid droplet by an intravenous drip method by leaving 2 µL of n-hexadecane droplets to stand for each of three points of a central portion, a left end portion, and a right end portion of the coating film surface at 20°C in accordance with JIS R 3257:1999. The results are shown in Table 1.

**[Table 1]**

| | High-molecular-weight component | | Low-molecular-weight component | | Hexadecane contact angle [°] |
|---|---|---|---|---|---|
| | Type | Number of parts by mass | Type | Number of parts by mass | |
| Example 1 | Poly-DSTF | 90 | DSTF | 10 | 46.8 |
| Example 2 | Poly-DSTF | 95 | DSTF | 5 | 45.0 |
| Example 3 | Poly-DSTF | 97 | DSTF | 3 | 44.8 |
| Example 4 | PMMA | 90 | DSTF | 10 | 5.9 |
| Example 5 | Poly-STA | 100 | - | - | 41.9 |
| Example 6 | Poly-STA | 90 | STA | 10 | 43.2 |

The coating films of the oil-repellent compositions of Examples 1 to 3 had larger hexadecane contact angles and excellent oil repellency, as compared with those of Examples 4 to 6.

### [Example 7]

14.0 g of DSTF, 16.5 g of VSt, 1.1 g of MOI-BP, 0.3 g of StSH, 0.9 g of E-420, 0.2 g of P-204, 0.3 g of AQ-18, 10.3 g of DPG, and 57.7 g of ion-exchanged water were put into a polypropylene-made cup and heated at 80°C for 10 minutes. After that, the mixture was mixed using a homogenizer (BIO MIXER manufactured by NIHONSEIKI KAISHA LTD.) to obtain a mixed solution.

The obtained mixed solution was treated at 40 MPa, using a high-pressure emulsifier (Mini-lab manufactured by APV Rannie), to obtain an emulsion. 100 g of the obtained emulsion was put into a glass ampule and cooled to 40°C or lower. 0.9 g of VA-061A was added thereto, 2.6 g of VdCl was introduced to the mixture, and the mixture was subjected to a polymerization reaction at 60°C for 15 hours with stirring to obtain an emulsion of a copolymer. About 10 g of acetone was added dropwise to 1 g of the obtained emulsion, and the mixture was heated and stirred at 50°C, and cooled to precipitate a solid. The obtained solid was recovered by filtration under reduced pressure to obtain a copolymer. The Mw and the Mn of the copolymer thus obtained were measured.

The obtained copolymer emulsion was diluted with distilled water to adjust the concentration of solid contents to each of 0.5% by mass, 1.0% by mass, and 1.5% by mass. Thereafter, MEIKANATE TP-10 was added to the emulsion at each concentration so that the concentration reached 1.5% by mass, thereby preparing a liquid-repellent composition. With regard to the liquid-repellent composition, the water repellency (water repellency after air drying) and the water repellency after washing were evaluated.

### [Examples 8 to 12]

An emulsion of a copolymer was obtained in the same manner as in Example 7, except that the charged amount of each raw material was changed to the amount shown in Table 2. The Mw and the Mn were measured from each of the emulsions in the same manner as in Example 7. In Example 8, STA was put into a polypropylene-made cup as a monomer component at the beginning of the reaction.

For the copolymer emulsion obtained in each Example, a liquid-repellent composition was prepared in the same manner as in Example 7, and the water repellency (water repellency after air drying) and the water repellency after washing were evaluated.

**[Table 2]**

| | | | Example | | | | | |
|---|---|---|---|---|---|---|---|---|
| | | | 7 | 8 | 9 | 10 | 11 | 12 |
| Charged amount (g) | Monomer (a) | DSTF | 14 | 9.8 | 16 | 14 | 14 | - |
| | Monomer (b) | Vst | 16.5 | 17.2 | 18.5 | 16.5 | 16.5 | 29.7 |
| | Monomer (c) | VdCl | 2.9 | 2.9 | - | 4 | - | 3.4 |
| | Monomer (d) | STA | - | 3.5 | - | - | - | - |
| | Monomer (e) | MOI-BP | 1.1 | 1.1 | - | - | 4 | 1.4 |
| | Molecular weight adjuster | StSH | 0.3 | 0.3 | 0.3 | 0.3 | 0.3 | 0.3 |
| | Surfactant | E-420 | 0.9 | 0.9 | 0.9 | 0.9 | 0.9 | 0.9 |
| | | P-204 | 0.2 | 0.2 | 0.2 | 0.2 | 0.2 | 0.2 |
| | | AQ-18 | 0.3 | 0.3 | 0.3 | 0.3 | 0.3 | 0.3 |
| | Polymerization initiator | VA-061A | 0.9 | 0.9 | 0.9 | 0.9 | 0.9 | 0.9 |
| | Liquid-state solvent | DPG | 10.3 | 10.3 | 10.3 | 10.3 | 10.3 | 10.3 |
| | | Ion-exchanged water | 57.7 | 57.7 | 57.7 | 57.7 | 57.7 | 52.7 |
| Charged number of parts by mass | Monomer (a) | | 40.6 | 28.4 | 46.4 | 40.6 | 40.6 | - |
| | Monomer (b) | | 47.8 | 49.9 | 53.6 | 47.8 | 47.8 | 86.1 |
| | Monomer (c) | | 8.4 | 8.4 | - | 11.6 | - | 9.9 |
| | Monomer (d) | | - | 10.1 | - | - | - | - |
| | Monomer (e) | | 3.2 | 3.2 | - | - | 11.6 | 4.1 |
| Molecular weight | | Mn | 18,000 | 19,300 | 17,800 | 19,000 | 18,500 | 24,700 |
| | | Mw | 59,000 | 56,300 | 58,700 | 57,500 | 58,600 | 71,500 |
| | | Mw/Mn | 3.28 | 2.92 | 3.30 | 3.03 | 3.17 | 2.89 |

**[Table 3]**

| | Substrate | Concentration of solid contents (% bv mass) | Example | | | | | |
|---|---|---|---|---|---|---|---|---|
| | | | 7 | 8 | 9 | 10 | 11 | 12 |
| Water repellency | PET cloth | 0.5 | 2+ | 2+ | 2 | 2+ | 2 | 2+ |
| | | 1 | 3+ | 3+ | 3 | 3 | 3+ | 3 |
| | | 1.5 | 4 | 4 | 4 | 4 | 4 | 4 |
| | Dyed nylon cloth | 0.5 | 3+ | 3+ | 3 | 3 | 3 | 2+ |
| | | 1 | 4 | 4 | 4- | 4 | 4 | 4 |
| | | 1.5 | 4+ | 4+ | 4 | 4+ | 4+ | 4 |
| | Cotton | 0.5 | 4 | 3+ | 3+ | 3+ | 3+ | 2+ |
| | | 1 | 4+ | 4 | 4 | 4+ | 4 | 4 |
| | | 1.5 | 5- | 4+ | 4+ | 4+ | 4+ | 4+ |
| Washing durability (20 times) | PET cloth | 0.5 | 1 | 1 | 1 | 1 | 1 | 1 |
| | | 1 | 2 | 2- | 2 | 2 | 2 | 1+ |
| | | 1.5 | 2+ | 3- | 2+ | 2+ | 2+ | 2+ |
| | Dyed nylon cloth | 0.5 | 2 | 2- | 2- | 2 | 2 | 1 |
| | | 1 | 3- | 3- | 2 | 2+ | 2+ | 2+ |
| | | 1.5 | 3- | 3- | 2+ | 3- | 3- | 2+ |
| | Cotton | 0.5 | 1+ | 1 | 1 | 1 | 1 | 1 |
| | | 1 | 2 | 2 | 1+ | 2- | 2- | 2- |
| | | 1.5 | 2+ | 2 | 2 | 2 | 2+ | 2 |

Table 2 shows the measurement results of the Mw, the Mn, and the Mw/Mn of the copolymers of each Example together with the proportion of each monomer in the monomer component. Table 3 shows the evaluation results of the water repellency and the washing durability of each Example. In Examples 7 to 11, water repellency and washing durability equal to or higher than those of Example 12 were obtained.

### [Industrial Applicability]

According to the present invention, provided are a liquid-repellent composition which is hydrocarbon-based and can impart excellent liquid repellency; a method for treating a substrate using the liquid-repellent composition; and an article equipped with a coating film which is hydrocarbon-based and has excellent liquid repellency.

Priority is claimed on Japanese Patent Application No. 2021-069286, filed April 15, 2021, the content of which is incorporated herein by reference.

## Claims

1. A liquid-repellent composition comprising a polymer (A) having a unit based on a monomer (a) represented by Formula (a)
(R¹-Q¹-)HC=CH(-Q²-R²) Formula (a)
wherein in Formula (a), Q¹ and Q² each independently represent a divalent linking group, and
R¹ and R² each independently represent a monovalent hydrocarbon group having 8 to 24 carbon atoms.

2. The liquid-repellent composition according to Claim 1,
wherein Q¹ and Q² of the monomer (a) are each independently one of the group consisting of-C(=O)-, -C(=O)-O-, -O-C(=O)-, and -C(=O)-NH-.

3. The liquid-repellent composition according to Claim 1 or 2,
wherein R¹ and R² of the monomer (a) are each independently a monovalent hydrocarbon group having 12 to 24 carbon atoms.

4. The liquid-repellent composition according to any one of Claims 1 to 3,
wherein the polymer (A) is a copolymer further having a unit based on the following monomer (b),
monomer (b): a monomer other than the monomer (a), the monomer having one polymerizable unsaturated group and an electron-donating group adjacent to the unsaturated group in one molecule.

5. The liquid-repellent composition according to Claim 4,
wherein the monomer (b) is a monomer (b 1) represented by Formula (b 1),
CH₂=CHR³ Formula (b 1)
wherein in Formula (b 1), R³ is an electron-donating group.

6. The liquid-repellent composition according to Claim 5,
wherein the electron-donating group is at least one selected from the group consisting of an aliphatic hydrocarbon group which may have a substituent, -O-C(=O)-R⁴, -O-R⁴, and -NH-C(=O)-R⁴, in which R⁴ represents an aliphatic hydrocarbon group which may have a substituent.

7. The liquid-repellent composition according to any one of Claims 4 to 6,
wherein a proportion of the unit based on the monomer (a) is 5% to 80% by mass with respect to all constitutional units of the polymer (A).

8. The liquid-repellent composition according to any one of Claims 4 to 7,
wherein a proportion of the unit based on the monomer (b) is 20% to 95% by mass with respect to all constitutional units of the polymer (A).

9. The liquid-repellent composition according to any one of Claims 1 to 8,
wherein the polymer (A) is a copolymer further having a unit based on a monomer (c) represented by Formula (c),
CH₂=CX¹X² Formula (c)
wherein in Formula (c), X¹ and X² each independently represent a halogen atom or a hydrogen atom, and X¹ and X² are not hydrogen atoms at the same time.

10. The liquid-repellent composition according to Claim 9,
wherein the monomer (c) is at least one selected from the group consisting of vinyl chloride and vinylidene chloride.

11. The liquid-repellent composition according to any one of Claims 1 to 10,
wherein the polymer (A) is a copolymer further having a unit based on a monomer (d) represented by Formula (d),
CH₂=CR⁵C(=O)OR⁶ Formula (d)
wherein in Formula (d), R⁵ represents a hydrogen atom or a methyl group, and R⁶ represents a monovalent hydrocarbon group which may have a substituent.

12. The liquid-repellent composition according to any one of Claims 1 to 11,
wherein the polymer (A) is a copolymer further having a unit based on a monomer (e) having a crosslinkable functional group.

13. The liquid-repellent composition according to any one of Claims 1 to 12,
wherein the polymer (A) has no fluorine atom.

14. A method for treating a substrate, the method comprising treating a substrate with the liquid-repellent composition according to any one of Claims 1 to 13.

15. An article comprising a substrate treated with the liquid-repellent composition according to any one of Claims 1 to 13.
